# EUROPÄISCHE PATENTSCHRIFT

(11) **EP 1 475 604 B1**
(45) Veröffentlichungstag und Bekanntmachung des Hinweises auf die Patenterteilung: **03.01.2007**
(21) Anmeldenummer: 04002112.3
(22) Anmeldetag: 31.01.2004
(51) Int. Cl.: G01B 7/30, G01D 5/20

(54) **Induktiver Drehwinkelsensor**
Inductive angle sensor
Capteur d'angle inductif

(30) Priorität: 09.05.2003 DE 10320990
(43) Veröffentlichungstag der Anmeldung: 10.11.2004
(73) Patentinhaber: Dr. Johannes Heidenhain GmbH, 83292 Traunreut (DE)
(72) Erfinder: Tiemann, Marc Oliver, 83365 Nussdorf (DE)

(56) Entgegenhaltungen:
- DE-A1- 19 751 853

## Beschreibung

Die Erfindung betrifft einen induktiven Drehwinkelsensor zur Bestimmung von Relativwinkelpositionen gemäß dem Oberbegriff des Anspruchs 1 und einen damit ausgestatteten Drehgeber gemäß dem Anspruch 7.

Induktive Drehwinkelsensoren werden beispielsweise in Drehgebern zur Bestimmung der Winkellage zweier relativ zueinander drehbaren Maschinenteile verwendet. Bei induktiven Drehwinkelsensoren werden Erregerspulen und Empfängerspulen etwa in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, die nicht selten als Teilscheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerspulen ein zeitlich wechselndes elektrisches Erregerfeld angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet. Üblicherweise sind die Bauelemente einer derartigen Auswerteelektronik auf einer weiteren Leiterplatte untergebracht.

Häufig werden Drehgeber mit induktiven Drehwinkelsensoren als Messgeräte für elektrische Antriebe, zur Bestimmung der absoluten Winkellage von entsprechenden Antriebswellen, eingesetzt. Es besteht in vielen Einsatzbereichen derartiger Drehwinkelsensoren bzw. Drehgebern permanent der Wunsch zur Miniaturisierung dieser Geräte.

In der DE 197 51 853 A1 der Anmelderin wird ein Aufbau für einen induktiven Drehwinkelsensor beschrieben, bei dem die Erreger- und Empfängerspulen in einer mehrschichtigen Leiterplatten-Struktur angeordnet sind. Bei der Reduzierung der Baugröße eines derartigen Drehwinkelsensors, insbesondere bei der Verkleinerung des Durchmessers der Abtastleiterplatte zeigt sich, dass insbesondere die Empfängerleiterbahnen, welche Signale mit einer Signalperiode über eine Umdrehung liefern, einen nicht tolerierbaren Offset-Fehler erzeugen.

Der Erfindung liegt daher die Aufgabe zugrunde, einen induktiven Drehwinkelsensor zu schaffen, durch welchen auch bei kleinsten Baugrößen eine hohe Signalgüte erreichbar ist. Ebenso wird durch die Erfindung ein zuverlässiger Drehgeber mit kleinen Außenabmessungen geschaffen.

Diese Aufgabe wird erfindungsgemäß durch die Merkmale des Anspruches 1 bzw. des Anspruches 7 gelöst.

Erfindungsgemäß liefert mindestens eine Empfängerleiterbahn auf einer Leiterplatte innerhalb einer Umdrehung relativ zum Teilungselement eine ungerade Anzahl von Signalperioden, wobei diese Empfängerleiterbahn einen ersten und einen zweiten Teilabschnitt aufweist. Diese verlaufen jeweils in verschiedenen Ebenen, wobei der erste Teilabschnitt eine größere Länge aufweist als der zweite. Auf diese Weise ist eine signifikante Reduzierung des Offset-Fehlers der entsprechenden Signale möglich.

Dabei können die Teilabschnitte ihrerseits wieder in mehrere Teilsegmente aufgeteilt sein. Als ein Teilabschnitt einer Empfängerleiterbahn ist also ein, unter Umständen unterbrochener, Bereich einer Empfängerleiterbahn zu verstehen, der in einer Ebene verläuft.

In einer bevorzugten Ausgestaltung der Erfindung weist der erste Teilabschnitt der Empfängerleiterbahn mindestens das 1,5-fache, insbesondere mindestens das 3-fache der Länge des zweiten Teilabschnitts auf.

Mit Vorteil sind auf der Leiterplatte mehrere derartige Empfängerleiterbahnen aufgebracht, wobei sich in einer bevorzugten Ausgestaltung der Erfindung die jeweils längeren Teilabschnitte in ein und derselben Ebene befinden. Durch diese Bauweise werden Amplitudenfehler bzw. -unterschiede der Signale der einzelnen Empfängerleiterbahnen minimiert, weil die längeren Teilabschnitte dann jeweils vom Teilungselement mit gleichem Abstand entfernt sind.

Vorteilhafte Ausbildungen der Erfindung entnimmt man den abhängigen Ansprüchen.

Weitere Einzelheiten und Vorteile des erfindungsgemäßen induktiven Drehwinkelsensors, sowie des damit ausgestatteten Drehgebers ergeben sich aus der nachfolgenden Beschreibung eines Ausführungsbeispiels anhand der beiliegenden Figuren.

Es zeigen die
- Figur 1: eine Draufsicht auf eine Teilscheibe,
- Figur 2: eine Draufsicht auf eine Abtastleiterplatte,
- Figur 3: eine schematische Teilschnittdarstellung durch die Abtastleiterplatte
- Figur 4: ein Signalverlauf, wie er von den inneren Empfängerleiterbahnen geliefert wird,
- Figur 5: eine perspektivische Ansicht eines Drehgebers mit zur Veranschaulichung aufgebrochenem Gehäuse.

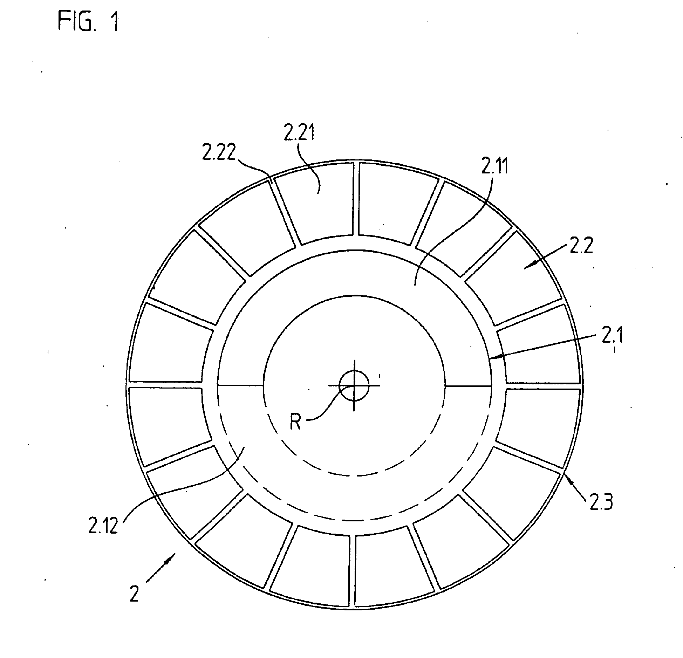

Aus den Figuren 1 - 3 ist der prinzipielle Aufbau eines erfindungsgemäßen Drehwinkelsensors zu entnehmen. In der Figur 1 ist ein Teilungselement in Form einer kreisrunden Teilscheibe 2 gezeigt. Die Teilscheibe 2 besteht aus einem Substrat 2.3, welches im dargestellten Ausführungsbeispiel aus Epoxydharz hergestellt ist und auf dem zwei Teilungsspuren 2.1, 2.2 angeordnet sind. Die Teilungsspuren 2.1, 2.2 sind kreisförmig ausgebildet und bezüglich einer Drehachse R konzentrisch mit unterschiedlichem Durchmesser auf dem Substrat 2.3 angeordnet. Die beiden Teilungsspuren 2.1, 2.2 bestehen jeweils aus einer periodischen Abfolge von alternierend angeordneten elektrisch leitfähigen Teilungsbereichen 2.11, 2.21 und nichtleitfähigen Teilungsbereichen 2.12, 2.22. Als Material für die elektrisch leitfähigen Teilbereiche 2.11, 2.21 wurde im gezeigten Beispiel Kupfer auf das Substrat 2.3 aufgebracht. In den nichtleitfähigen Teilungsbereichen 2.12, 2.22 wurde das Substrat 2.3 dagegen nicht beschichtet.

Die innere Teilungsspur 2.1 besteht in der dargestellten Ausführungsform aus einem ersten halbkreisförmigen Teilungsbereich 2.11 mit elektrisch leitfähigem Material, hier Kupfer, sowie einem zweiten halbkreisförmigen Teilungsbereich 2.12, in dem kein leitfähiges Material angeordnet ist.

Radial benachbart zur ersten Teilungsspur 2.1 liegt die zweite Teilungsspur 2.2 auf dem Substrat 2.3, wobei auch die Teilungsspur 2.2 aus einer Vielzahl elektrisch leitfähiger Teilungsbereiche 2.21 sowie dazwischen angeordneten nichtleitfähigen Teilungsbereichen 2.22 besteht. Die verschiedenen Teilungsbereiche 2.21, 2.22 sind materialmäßig dabei ebenso ausgebildet wie die Teilungsbereiche 2.11, 2.12 der ersten Teilungsspur 2.1. Insgesamt umfasst die zweite Teilungsspur 2.2 im dargestellten Ausführungsbeispiel sechzehn periodisch angeordnete, elektrisch leitfähige Teilungsbereiche 2.21 sowie entsprechend sechzehn dazwischen angeordnete nichtleitfähige Teilungsbereiche 2.22.

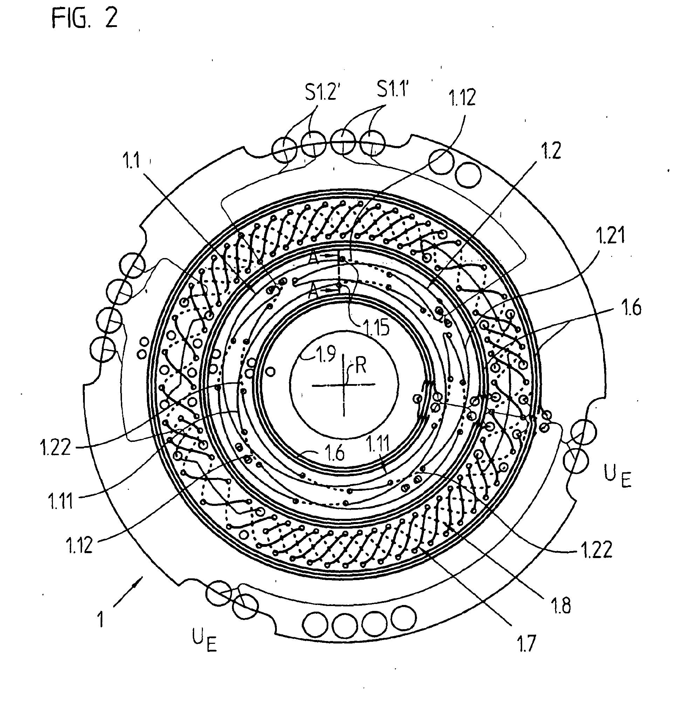

Die in Figur 2 gezeigte, zur Abtastung der Teilscheibe 2 vorgesehene Abtastleiterplatte 1 umfasst als Empfängerspulen in einer inneren Empfängerspur Empfängerleiterbahnen 1.1, 1.2 und in einer äußeren Empfängerspur weitere Empfängerleiterbahnen 1.7, 1.8. Die zusammengehörigen Paare der Empfängerleiterbahnen 1.1 , 1.2; 1.7, 1.8 einer jeweiligen Empfängerspur sind hierbei relativ zueinander versetzt.

Darüber hinaus sind als Erregerspulen an der Abtastleiterplatte 1 die Erregerleiterbahnen 1.6 vorgesehen, welche auf einer inneren, einer mittleren und einer äußeren Erregerspur aufgebracht sind. Die Abtastleiterplatte 1 selbst weist eine zentrische Bohrung 1.9 auf und ist als eine Leiterplatte, welche mehrere Lagen aufweist, ausgeführt.

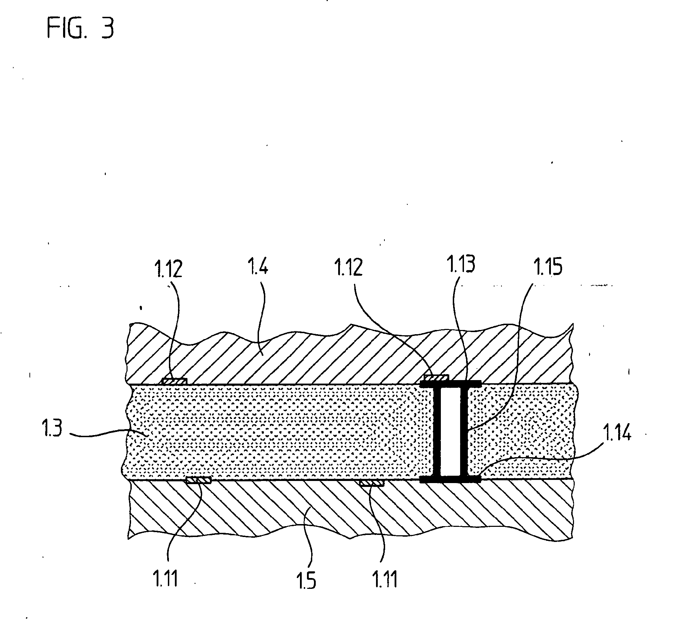

In der Figur 3 ist ein Teilschnitt A-A der Abtastleiterplatte 1 gezeigt, wobei dort nur die zur Erläuterung der Erfindung wesentlichen Lagen gezeigt sind. An einer Seite einer Kernschicht 1.3, also in einer ersten Ebene, ist ein erster Teilabschnitt 1.11, 1.21 der Empfängerleiterbahnen 1.1, 1.2 aufgebracht, wobei im Teilschnitt A-A nur der erste Teilabschnitt 1.11 der ersten Empfängerleiterbahnen 1.1 sichtbar ist. Auf der anderen Seite der Kernschicht 1.3, also in einer zweiten Ebene, sind die jeweils zweiten Teilabschnitte 1.12, 1.22 der Empfängerleiterbahnen 1.1, 1.2 aufgebracht. Im Teilschnitt A-A sind allerdings nur die zweiten Teilabschnitte 1.12 der Empfängerleiterbahnen 1.1 sichtbar. Darüber hinaus sind in der als nichtleitende Schicht ausgestalteten Kernschicht 1.3 Vias 1.15 vorgesehen, die im Schichtaufbau der Abtastleiterplatte 1 im Prinzip als Buried-Vias ausgeführt sind. An den beiden Oberflächen der Kernschicht 1.3 sind entsprechend jeweils Pads 1.13, 1.14 im Bereich der Vias 1.15 angeordnet. Auf diese Weise ist eine Kontaktierung von Leiterbahnen, die sich auf den unterschiedlichen Seiten der Kernschicht 1.3 befinden möglich. Der Teilschnitt A-A verläuft durch einen derartigen Via 1.15 mit zugehörigen Pads 1.13, 1.14, wobei an einem Pad 1.14 ein zweiter Teilabschnitt 1.12 der ersten Empfängerleiterbahnen 1.1 kontaktiert ist. Dabei ist aus fertigungstechnischen Gründen der Durchmesser der Kontaktfläche der Pads 1.13, 1.14 größer (hier 500 µm) als die Breite der Empfängerleiterbahnen 1.1, 1.2 (hier 125 µm). Die Kernschicht 1.3 mit den Empfängerleiterbahnen 1.1, 1.2 ist zu beiden Seiten mit jeweils einem Prepreg 1.4, 1.5 umgeben. Darüber hinaus weist die Abtastleiterplatte 1 noch weitere Schichten auf, welche jedoch in den Figuren nicht dargestellt sind.

In der Figur 2 sind die ersten Teilabschnitte 1.11, 1.21 der Empfängerleiterbahnen 1.1, 1.2 in durchgezogenen Linien dargestellt und die zweiten Teilabschnitte 1.12, 1.22 der Empfängerleiterbahnen 1.1, 1.2 in gestrichelten Linien gezeigt. Die Abtastleiterplatte 1 ist so gestaltet, dass die ersten Teilabschnitte 1.11, 1.21 der Empfängerleiterbahnen 1.1, 1.2 allesamt auf der gleichen Seite der Kernschicht 1.3 aufgebracht sind, während die zweiten, kürzeren, Teilabschnitte 1.12, 1.22 der Empfängerleiterbahnen 1.1, 1.2 allesamt auf der anderen Seite der Kernschicht 1.3 liegen. Die kürzeren Teilabschnitte 1.12, 1.22 dienen gleichsam als Brücken zur Vermeidung von Überkreuzungen, bzw. Kurzschlüssen der Empfängerleiterbahnen 1.1, 1.2. Dabei bestehen die beiden Empfängerleiterbahnen 1.1, 1.2 aus mehreren Teilsegmenten, nämlich aus den in durchgezogenen Linien dargestellten ersten Teilabschnitten 1.11, 1.21 und aus den gestrichelt dargestellten zweiten Teilabschnitten 1.12, 1.22. Die ersten Teilabschnitte 1.11, 1.21 der Empfängerleiterbahnen 1.1, 1.2 weisen eine wesentlich größere Länge auf als die zweiten Teilabschnitte 1.12, 1.22 der Empfängerleiterbahnen 1.1, 1.2. Im gezeigten Beispiel liegt das Verhältnis der Längen der ersten Teilabschnitte 1.11, 1.21 (entsprechend der Summe der zusammengehörigen Teilsegmente) zur Länge der zweiten Teilabschnitte 1.12, 1.22 bei etwa 4,5. Demnach weisen also die jeweils ersten Teilabschnitte 1.11; 1.21 der Empfängerleiterbahn 1.1; 1.2 das 4,5-fache der Länge der jeweils zweiten Teilabschnitte 1.12; 1.22 auf.

Im zusammengebauten Zustand stehen sich die Teilscheibe 2 und die Abtastleiterplatte 1 gegenüber; so dass die Achse R durch die Mittelpunkte beider Elemente verläuft und bei einer Relativdrehung zwischen Teilscheibe 2 und Abtastleiterplatte 1 in der Abtastleiterplatte 1 ein von der jeweiligen Winkelstellung abhängiges Signal durch Induktionseffekte erzeugbar ist.

Vorraussetzung für die Bildung von entsprechenden Signalen ist, dass die Erregerleiterbahnen 1.6 ein zeitlich wechselndes elektromagnetisches Erregerfeld im Bereich der Abtastspuren bzw. im Bereich der damit abgetasteten Teilungsspuren 2.1 und 2.2 erzeugen. Im dargestellten Ausführungsbeispiel sind die Erregerleiterbahnen 1.6 als mehrere planar-parallele stromdurchflossene Einzel-Leiterbahnen ausgebildet. Werden die Erregerleiterbahnen 1.6 einer Leiterbahneinheit allesamt in der gleichen Richtung von Strom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt.

Die Stromrichtung der unmittelbar an eine gemeinsame Abtastspur angrenzenden Leiterbahneinheiten bzw. die entsprechende Verschalung dieser Leiterbahneinheiten ist dabei entgegengesetzt zu wählen, so dass die Feldlinien im Bereich der Abtastspuren jeweils identisch orientiert sind. Die Versorgung der Erregerleiterbahnen 1.6 mit einer zeitlich wechselnden Versorgungsspannung erfolgt über die ebenfalls in Figur 2 eingezeichneten Versorgungsspannungsabgriffe UE.

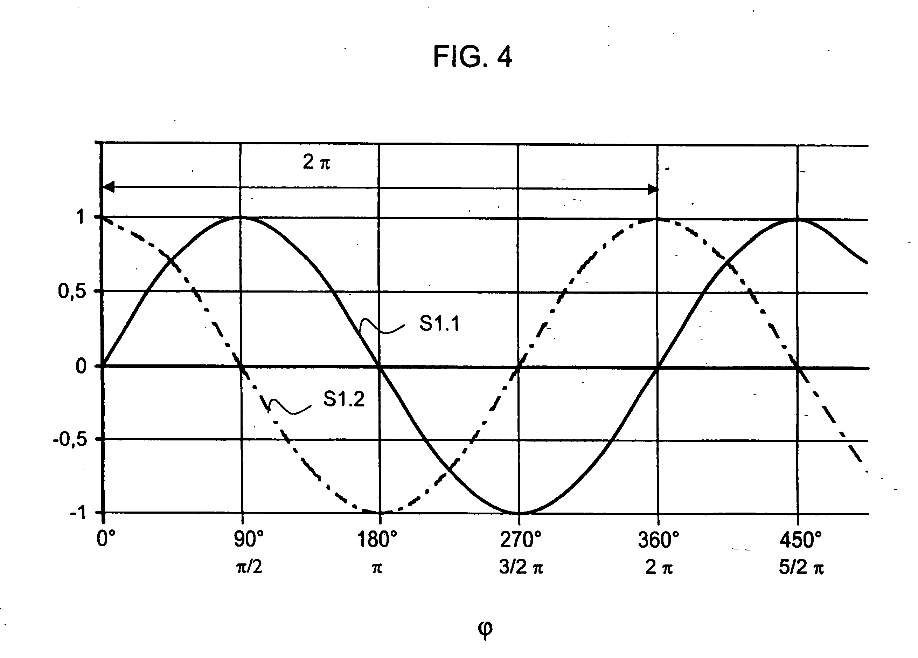

Im Betrieb des Drehwinkelsensors liefern infolge von Induktionseffekten die inneren Empfängerleiterbahnen 1.1, 1.2 jeweils eine einzige Signalperiode bei der Abtastung der Teilungsspur 2.1. Durch die versetzte Anordnung der Empfängerleiterbahnen 1.1, 1.2 auf der Kernschicht 1.3 entstehen im Betrieb des Drehwinkelsensors zwei induzierte Ausgangssignaie S1.1', S1.2', die einen Phasenversatz von 90° zueinander aufweisen. Die Ausgangssignale S1.1', S1.2' sind amplitudenmoduliert und werden mit Hilfe einer Auswerteelektronik in einem Folgeschritt demoduliert, so dass sinusförmige Signale S1.1, S1.2, wie sie in der Figur 4 dargestellt sind, entstehen. Dabei ist ersichtlich, dass bei einem Drehwinkel von 2π, also 360°, eine Signalperiode erzeugt wird.

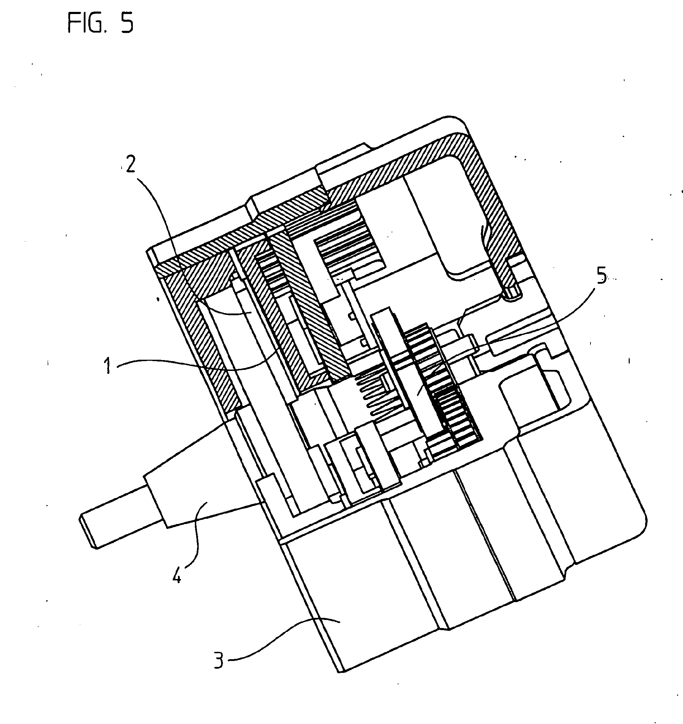

Aus der Abtastung der Teilungsspur 2.1 resultiert also eine relativ grobe, absolute Positionsinformation innerhalb einer Umdrehung der Teilscheibe 2 um die Drehachse R. Diese Signale liefern ein eindeutiges absolutes Positionssignal innerhalb einer Umdrehung einer Welle 4 (siehe Figur 5). Über die bekannte Auswertung der um 90° phasenversetzten Signale S1.1, S1.2 ist zudem eine Richtungserkennung bei der Drehbewegung gewährleistet.

Die Empfängerleiterbahnen 1.1, 1.2 werden in zwei getrennten Arbeitschritten, bzw. in zwei separat durchgeführten Strukturierungsprozessen, zunächst auf die eine Seite der Kernschicht 1.3 und danach auf die andere, gegenüberliegende, Seite der Kernschicht 1.3 aufgebracht. Dies hat zur Folge, dass die Teilabschnitte 1.11 gegenüber den Teilabschnitten 1.12 (bzw. die Teilabschnitte 1.21 gegenüber den Teilabschnitten 1.22), bedingt durch fertigungstechnische Toleranzen zwangsläufig mehr oder weniger stark gegeneinander verschoben auf der jeweiligen Seite der Kernschicht 1.3 aufgebracht sind. Durch die im Vergleich zur Breite der Empfängerleiterbahnen 1.1, 1.2 größeren Durchmesser der Kontaktfläche der Pads 1.13, 1.14 wird dennoch eine sichere Kontaktierung im Rahmen der zulässigen Verschiebungstoleranzen gewährleistet.

Die Anordnung, bei der die ersten Teilabschnitte 1.11, 1.21 der Empfängerleiterbahnen 1.1, 1.2 eine wesentlich größere Länge aufweisen als die zweiten Teilabschnitte 1.12, 1.22 der Empfängerleiterbahnen 1.1, 1.2 hat aus diesem Grund bezüglich der Signalqualität einen erheblichen Vorteil gegenüber herkömmlichen Systemen. Die induzierte Spannung ist nämlich von der umschlossenen Spulenfläche abhängig, das heißt im gezeigten Beispiel von den umschlossenen Flächen der Empfängerleiterbahnen 1.1, 1.2. Bei herkömmlichen Systemen, bei denen die Teilabschnitte der Leiterbahnen zu gleichen Teilen auf den zwei verschiedenen Flächen einer Platine aufgebracht sind, führt die fertigungsbedingt unvermeidbare Verschiebung zu einem merklichen Unterschied der jeweiligen Spulenfläche.

Da die Signale, welche aus den beiden, sich gegenüberliegenden, Teilflächen resultieren ein unterschiedliches Vorzeichen aufweisen, und in den beiden Spulen eine vom Betrag unterschiedliche Spannung induziert wird, entsteht an Spulen der herkömmlichen Systeme mit ungünstigen tatsächlichen Verschiebungen ein Offset im Signal.

Ein Vorteil der vorliegenden Erfindung liegt darin, dass durch ein gegenseitiges Verschieben der Empfängerleiterbahnen 1.1, 1.2, welche auf unterschiedlichen Seite der Kernschicht 1.3 aufgebracht sind, kein nennenswerter Offsetfehler entsteht, weil dadurch die Spulenfläche praktisch nicht verändert wird. Es ist nämlich der überwiegende Großteil der Spule, das heißt die jeweils ersten Teilabschnitte 1.11, 1.21 auf ein und derselben Seite der Kernschicht 1.3 aufgebracht und ist somit hochgenau festgelegt. Bei einer Verschiebung der Teilabschnitte 1.11 gegenüber den Teilabschnitten 1.12 auf der anderen Seite der Kernschicht 1.3 (bzw. die Teilabschnitte 1.21 gegenüber den Teilabschnitten 1.22) tritt folglich ein zu vernachlässigender Messfehler auf. Andererseits können durch die Erfindung mit vergleichsweise geringem Aufwand bezüglich der Herstellungsgenauigkeit präzis arbeitende Drehwinkelsensoren hergestellt werden.

Die weiteren Empfängerleiterbahnen 1.7, 1.8 auf der zweiten, äußeren Abtastspur sind ebenfalls zu beiden Seiten der Kernschicht 1.3 aufgebracht und dienen zur Abtastung der zweiten Teilungsspur 2.2. Zwischen den beiden Empfängerleiterbahnen 1.7, 1.8 ist ebenfalls ein Relativ-Versatz vorgesehen, so dass ausgangsseitig bei der Abtastung der zweiten Teilungsspur 2.2 zwei Signale entstehen, zwischen denen ein 90° Phasenversatz besteht.

Die Empfängerleiterbahnen 1.7, 1.8 weisen jeweils sechzehn, also 2⁴, Windungen auf, so dass mit den Empfängerleiterbahnen 1.7, 1.8 ein vergleichsweise hochauflösendes Inkrementalsignal bei der Relativbewegung der Teilscheibe 2 gegenüber der Abtastleiterplatte 1 erzeugt werden kann. In Verbindung mit der groben absoluten Positionsbestimmung über die erste Teilungsspur 2.1 ist über eine derartige Anordnung eine hochauflösende absolute Drehwinkelbestimmung möglich. Die weiteren Empfängerleiterbahnen 1.7, 1.8 sind so ausgestaltet, dass sie bezüglich ihrer Länge im Gegensatz zu den inneren Empfängerleiterbahnen 1.1, 1.2 etwa gleichmäßig auf die beiden Seiten der Kernschicht 1.3 verteilt sind. Eine ungleichmäßige Verteilung der Längen der weiteren Empfängerleiterbahnen 1.7, 1.8 auf die beiden Seiten der Kernschicht 1.3, bzw. in zwei unterschiedliche Ebenen, ist bei einer geradzahligen Anzahl von Windungen (bzw. bei den weiteren Empfängerleiterbahnen 1.7, 1.8, die innerhalb einer Umdrehung eine gerade Anzahl von Signalperioden liefern) nicht nötig, weil sich hier durch gegenseitige Kompensation Offset-Fehler aufheben, so dass in Summe ein zu vernachlässigender Fehler festzustellen ist.

Dieser Kompensationseffekt existiert aber nicht bei den Empfängerleiterbahnen 1.1, 1.2, die innerhalb einer Umdrehung eine ungerade Anzahl von Signalperioden liefern. Die Erfindung ist also nicht auf Drehwinkelsensoren beschränkt, bei denen die Empfängerleiterbahnen 1.1, 1.2 innerhalb einer Umdrehung nur eine Signalperiode liefern. Vielmehr können erfindungsgemäß die Empfängerleiterbahnen 1.1, 1.2 auch so ausgestaltet sein, dass drei, fünf oder mehr ungeradzahlige Signalperioden innerhalb einer Umdrehung erzeugbar sind.

Die Figur 5 zeigt einen Drehgeber, der mit dem erfindungsgemäßen induktiven Drehwinkelsensor ausgestattet ist. Der Drehgeber weist ein feststehendes Gehäuse 3 und die relativ zum Gehäuse drehbare Welle 4 auf. An der Welle 4 ist die Teilscheibe 2 mit den, in der Figur 5 nicht dargestellten, Teilungsspuren 2.1, 2.2 drehfest fixiert. Demgegenüber ist am Gehäuse 3 die Abtastleiterplatte 1 befestigt. Darüber hinaus umfasst der Drehgeber ein Untersetzungsgetriebe 5, welches für eine Multi-Turn-Funktionalität des Drehgebers benötigt wird. Durch die kompakte Bauweise des induktiven Drehwinkelsensors, insbesondere der Abtastleiterplatte 1 kann nunmehr der Drehgeber signifikant verkleinert gebaut werden.

Zur Erhöhung der Amplitude der Signale der Empfängerleiterbahnen 1.1, 1.2 sind die längeren ersten Teilabschnitte 1.11, 1.21 der Empfängerleiterbahnen 1.1, 1.2 allesamt auf der Seite der Kernschicht 1.3 aufgebracht, die der Teilscheibe 2 zugewandt ist, beziehungsweise näher an der Teilscheibe 2 angeordnet ist als die zweiten, kürzeren, Teilabschnitte 1.12, 1.22 der Empfängerleiterbahnen 1.1, 1.2, die auf der anderen Seite der Kernschicht 1.3 liegen. Die kürzeren Teilabschnitte 1.12, 1.22, welche gleichsam als Brücken zur Vermeidung von Überkreuzungen, bzw. Kurzschlüssen der Empfängerleiterbahnen 1.1, 1.2 dienen, sind also im Drehgeber auf derjenigen Seite der Kernschicht 1.3, die der Teilscheibe 2 abgewandt ist. Durch den kürzeren Abstand der längeren Teilabschnitte 1.11, 1.21 der Empfängerleiterbahnen 1.1, 1.2 zur Teilscheibe 2 wird die Signalamplitude erhöht.

## Patentansprüche

1. Induktiver Drehwinkelsensor, bestehend aus
· einer Leiterplatte (1), auf der eine Erregerleiterbahn (1.6) und mindestens eine Empfängerleiterbahn (1.1; 1.2) aufgebracht sind, wobei die mindestens eine Empfängerleiterbahn (1.1; 1.2) einen ersten Teilabschnitt (1.11; 1.21) aufweist, der in einer ersten Ebene verläuft, und einen zweiten Teilabschnitt (1.12; 1.22) aufweist, der in einer zweiten Ebene verläuft,
· einem Teilungselement (2), welches relativ zur Leiterplatte (1) drehbar ist und eine Teilungsspur (2.1) umfasst, die aus alternierend angeordneten, elektrisch leitfähigen und nichtleitfähigen Teilungsbereichen (2.11, 2.12) besteht, wobei
die mindestens eine Empfängerleiterbahn (1.1; 1.2) innerhalb einer Umdrehung relativ zum Teilungselement (2) eine ungerade Anzahl von Signalperioden liefert, **dadurch gekennzeichnet, dass**
der erste Teilabschnitt (1.11; 1.21) der mindestens einen Empfängerleiterbahn (1.1; 1.2) eine größere Länge aufweist als der zweite Teilabschnitt (1.12; 1.22).

2. Induktiver Drehwinkelsensor gemäß dem Anspruch 1, **dadurch gekennzeichnet, dass** der erste Teilabschnitt (1.11; 1.21) der Empfängerleiterbahn (1.1; 1.2) mindestens das 1,5-fache, insbesondere mindestens das 3-fache der Länge des zweiten Teilabschnitts (1.12; 1.22) aufweist.

3. Induktiver Drehwinkelsensor gemäß dem Anspruch 1 oder 2, **dadurch gekennzeichnet, dass** auf der Leiterplatte (1) mehrere Empfängerleiterbahnen (1.1; 1.2) aufgebracht sind, mit jeweils ersten Teilabschnitten (1.11; 1.21), die in einer ersten Ebene verlaufen, und zweiten Teilabschnitten (1.12; 1.22), die in einer zweiten Ebene verlaufen, wobei die jeweils längeren Teilabschnitte (1.11; 1.21) in ein und derselben Ebene verlaufen.

4. Induktiver Drehwinkelsensor gemäß einem der vorhergehenden Ansprüche, **dadurch gekennzeichnet, dass** die mindestens eine Empfängerleiterbahn (1.1; 1.2) innerhalb einer Umdrehung relativ zum Teilungselement (2) eine Signalperiode liefert.

5. Induktiver Drehwinkelsensor gemäß einem der vorhergehenden Ansprüche, **dadurch gekennzeichnet, dass** die Leiterplatte (1) einen mehrschichtigen Aufbau aufweist und die ersten und zweiten Teilabschnitte (1.11; 1.21; 1.12; 1.22) der mindestens einen Empfängerleiterbahn (1.1; 1.2) auf unterschiedlichen Seiten einer nichtleitenden Schicht (1.3) aufgebracht sind.

6. Induktiver Drehwinkelsensor gemäß einem der vorhergehenden Ansprüche, **dadurch gekennzeichnet, dass** der längere Teilabschnitt (1.11; 1.21) der Empfängerleiterbahn (1.1; 1.2) in einer Ebene verläuft, die näher an dem Teilungselement (2) angeordnet ist als diejenige Ebene, in welcher der kürzere zweite Teilabschnitt (1.12; 1.22) der Empfängerleiterbahn (1.1; 1.2) verläuft.

7. Drehgeber mit einem induktiven Drehwinkelsensor gemäss dem Anspruch 1.

8. Drehgeber mit einem induktiven Drehwinkelsensor gemäß dem Anspruch 7, **dadurch gekennzeichnet, dass** der längere Teilabschnitt (1.11; 1.21) der Empfängerleiterbahn (1.1; 1.2) in einer Ebene verläuft, die näher an dem Teilungselement (2) angeordnet ist als diejenige Ebene, in welcher der kürzere zweite Teilabschnitt (1.12; 1.22) der Empfängerleiterbahn (1.1; 1.2) verläuft.

## Claims

1. Inductive angle of rotation sensor, comprising
- a printed circuit board (1) on which an excitation strip conductor (1.6) and at least one receiver strip conductor (1.1; 1.2) are applied, the at least one receiver strip conductor (1.1; 1.2) having a first partial portion (1.11; 1.21) which extends in a first plane and having a second partial portion (1.12; 1.22) which extends in a second plane,
- a division element (2) which is rotatable relative to the printed circuit board (1) and comprises a division track (2.1) which comprises alternately disposed, electrically conductive and non-conductive division regions (2.11, 2.12), wherein
the at least one receiver strip conductor (1.1; 1.2) provides an odd number of signal periods within one revolution relative to the division element (2), **characterised in that**
the first partial portion 1.11; 1.21) of the at least one receiver strip conductor (1.1; 1.2) has a greater length than the second partial portion (1.12; 1.22).

2. Inductive angle of rotation sensor according to claim 1, **characterised in that** the first partial portion (1.11; 1.21) of the receiver strip conductor (1.1; 1.2) has at least 1.5 times, in particular at least 3 times the length of the second partial portion 1.12; 1.22).

3. Inductive angle of rotation sensor according to claim 1 or 2, **characterised in that** a plurality of receiver strip conductors (1.1; 1.2) is applied on the printed circuit board (1), having respectively first partial portions (1.11; 1.21) which extend in a first plane and second partial portions (1.12; 1.22) which extend in a second plane, the respectively longer partial portions (1.11; 1.21) extending in one and the same plane.

4. Inductive angle of rotation sensor according to one of the preceding claims, **characterised in that** the at least one receiver strip conductor (1.1; 1.2) provides a signal period within one revolution relative to the division element (2).

5. Inductive angle of rotation sensor according to one of the preceding claims, **characterised in that** the printed circuit board (1) has a multilayer construction and the first and second partial portions (1.11; 1.21; 1.12; 1.22) of the at least one receiver strip conductor (1.1; 1.2) are applied on different sides of a nonconducting layer (1.3).

6. Inductive angle of rotation sensor according to one of the preceding claims, **characterised in that** the longer partial portion (1.11; 1.21) of the receiver strip conductor (1.1; 1. 2) extends in a plane which is disposed closer to the division element (2) than that plane in which the shorter second partial portion (1.12; 1.22) of the receiver strip conductor (1.1; 1.2) extends.

7. Shaft encoder having an inductive angle of rotation sensor according to claim 1.

8. Shaft encoder having an inductive angle of rotation sensor according to claim 7, **characterised in that** the longer partial portion (1.11; 1.21) of the receiver strip conductor (1.1; 1.2) extends in a plane which is disposed closer to the division element (2) than that plane in which the shorter second partial portion (1.12; 1.22) of the receiver strip conductor (1.1; 1.2) extends.

## Revendications

1. Capteur d'angle de rotation inductif, comprenant
- une carte à circuit imprimé (1), sur laquelle sont disposées une piste conductrice d'excitation (1.6) et au moins une piste conductrice de réception (1.1; 1.2), la piste conductrice de réception (1.1; 1.2), au nombre d'au moins une, présentant une première portion (1.11; 1.21), qui s'étend dans un premier plan, et une deuxième portion (1.12; 1.22) qui s'étend dans un deuxième plan,
- un élément à graduation (2) qui peut être mis en rotation par rapport à la carte à circuit imprimé (1) et comporte une piste graduée (2.1) qui est constituée de zones graduées (2.11, 2.12) électriquement conductrices et électriquement non conductrices, disposées en alternance,
la piste conductrice de réception (1.1; 1.2), au nombre d'au moins une, fournissant un nombre impair de périodes de signal au cours d'une rotation par rapport à l'élément à graduation (2), **caractérisé par le fait que**
la première portion (1.11; 1.21) de la piste conductrice de réception (1.1; 1.2), au nombre d'au moins une, présente une longueur qui est supérieure à celle de la deuxième portion (1.12; 1.22).

2. Capteur d'angle de rotation inductif selon la revendication 1, **caractérisé par le fait que** la première portion (1.11; 1.21) de la piste conductrice de réception (1.1; 1.2) présente au moins 1,5 fois, en particulier au moins 3 fois, la longueur de la deuxième portion (1.12; 1.22).

3. Capteur d'angle de rotation inductif selon la revendication 1 ou 2, **caractérisé par le fait que** plusieurs pistes conductrices de réception (1.1; 1.2) sont disposées sur la carte à circuit imprimé (1) et comportent chacune des premières portions (1.11; 1.21), qui s'étendent dans un premier plan, et des deuxièmes portions (1.12; 1.22) qui s'étendent dans un deuxième plan, les portions (1.11; 1.21) plus longues s'étendant chaque fois dans un même plan.

4. Capteur d'angle de rotation inductif selon une des revendications précédentes, **caractérisé par le fait que** la piste conductrice de réception (1.1; 1.2), au nombre d'au moins une, fournit une période de signal au cours d'une rotation par rapport à l'élément à graduation (2).

5. Capteur d'angle de rotation inductif selon une des revendications précédentes, **caractérisé par le fait que** la carte à circuit imprimé (1) présente une structure multicouche et les premières et deuxièmes portions (1.11; 1.21; 1.12; 1.22) de la piste conductrice de réception (1.1; 1.2), au nombre d'au moins une, sont disposées sur des faces différentes d'une couche (1.3) non conductrice.

6. Capteur d'angle de rotation inductif selon une des revendications précédentes, **caractérisé par le fait que** la portion (1.11; 1.21) plus longue de la piste conductrice de réception (1.1; 1.2) s'étend dans un plan qui est plus proche de l'élément à graduation (2) que le plan dans lequel s'étend la deuxième portion (1.12; 1.22), plus courte, de la piste conductrice de réception (1.1; 1.2).

7. Encodeur doté d'un capteur d'angle de rotation inductif selon la revendication 1.

8. Encodeur doté d'un capteur d'angle de rotation inductif selon la revendication 7, **caractérisé par le fait que** la portion (1.11; 1.21) plus longue de la piste conductrice de réception (1.1; 1.2) s'étend dans un plan qui est plus proche de l'élément à graduation (2) que le plan dans lequel s'étend la deuxième portion (1.12; 1.22), plus courte, de la piste conductrice de réception (1.1; 1.2).
